# EUROPEAN PATENT SPECIFICATION

(11) **EP 4 468 428 B1**
(45) Date of publication and mention of the grant of the patent: **14.10.2026**
(21) Application number: 23743137.4
(22) Date of filing: 10.01.2023
(51) Int. Cl.: H01M 10/04, H01M 10/0587, H01M 50/107, H01M 50/119, H01M 50/133, H01M 50/533, H01M 50/534, H01M 50/536, H01M 50/545, H01M 50/586, H01M 50/595, H01M 50/559

(54) **CYLINDRICAL SECONDARY BATTERY**
ZYLINDRISCHE SEKUNDÄRBATTERIE
BATTERIE SECONDAIRE CYLINDRIQUE

(30) Priority: 21.01.2022 JP 2022007979
(43) Date of publication of application: 27.11.2024
(73) Proprietor: Panasonic Energy Co., Ltd., Osaka 570-8511 (JP)
(72) Inventor: YOSHII, Kazuhiro, Kadoma-shi, Osaka 571-0057 (JP); SUGIMOTO, Shuji, Kadoma-shi, Osaka 571-0057 (JP)
(74) Representative: Eisenführ Speiser
(86) International application number: PCT/JP2023/000281
(87) International publication number: WO 2023/140142

(56) References cited:
- WO-A1-2017/010042
- JP-A- 2014 132 516
- JP-A- 2019 149 251
- JP-A- 2019 149 251
- JP-A1- WO2017 010 042

## Description

### TECHNICAL FIELD

The present disclosure generally relates to a cylindrical secondary battery.

### BACKGROUND ART

In order to increase the capacity of a cylindrical secondary battery such as a non-aqueous electrolyte secondary battery, it is desired to reduce the thickness of an exterior housing can, reduce the diameter of a winding core of an electrode assembly, and increase the length of an electrode plate. However, the reduction in thickness of the exterior housing can makes it easier to crush the battery when a shock is applied, whereby the electrode assembly is deformed, and a short circuit occurs from a negative electrode tab as a starting point, thus causing heat generation. Document JPWO2017010042A1 discloses a prior art cylindrical secondary battery having a wound electrode assembly located in a stainless steel can with a side wall thickness of 0.05 - 0.2 mm, the wound electrode assembly comprises a negative electrode having an inner diameter of less than 3 mm and a negative electrode tab being welded to the winding end portion of the negative electrode and having a thickness of 0.01 - 0.12 mm and a width of 0.5 - 3 mm. Documents JP2019149251A and JP2014132516A present further examples of known secondary batteries having a wound electrode assembly located in a cylindrical can.

In order to increase the capacity of the cylindrical secondary battery, PATENT LITERATURE 1 discloses a battery in which stainless steel is used as a battery can material and the thickness of the exterior can is set to greater than or equal to 0.10 and less than or equal to 0.20 mm in order to enhance the resistance to the drop shock and increase the capacity. PATENT LITERATURE 2 discloses a battery in which the circularity of a spiral battery group is enhanced and the diameter of a winding core is set to 3.5 mm to achieve the high energy density of the battery. PATENT LITERATURE 3 discloses a battery in which the material and the dimension of a negative electrode tab are variously changed to suppress the reduction in capacity in high rate discharge and increase the output.

### CITATION LIST

### PATENT LITERATURE

PATENT LITERATURE 1: Japanese Unexamined Patent Application Publication No. Hei5-074423
PATENT LITERATURE 2: Japanese Unexamined Patent Application Publication No. Hei9-320639
PATENT LITERATURE 3: Japanese Unexamined Patent Application Publication No. 2001-176491

### SUMMARY

It is an advantage of PATENT LITERATURE 1 to enhance the resistance to drop shock and increase the capacity, but the effects are insufficient. Even in the batteries disclosed in PATENT LITERATURES 2 and 3, it is difficult to provide a cylindrical secondary battery which achieves both of higher battery capacity and higher resistance to drop shock while the thickness of the exterior housing can is reduced.

It is an advantage of the present disclosure to provide a cylindrical secondary battery that can achieve higher battery capacity and higher resistance to drop shock.

A cylindrical secondary battery according to the present disclosure comprises an electrode assembly in which a belt-shaped positive electrode and a belt-shaped negative electrode are wound with a belt-shaped separator interposed between the belt-shaped positive electrode and the belt-shaped negative electrode, a bottomed cylindrical exterior housing can that houses the electrode assembly, and a sealing assembly that seals an opening of the exterior housing can. In the exterior housing can, a side wall thickness of a can containing iron as a principal component is greater than or equal to 0.12 mm and less than or equal to 0.25 mm, in the electrode assembly, an innermost circumferential positive electrode inner diameter is greater than or equal to 2.2 mm and less than or equal to 3.5 mm, the negative electrode has a negative electrode tab electrically connected to the exterior housing can, and the negative electrode tab includes a Cu layer, has a thickness of greater than or equal to 0.05 mm and less than or equal to 0.09 mm, and a width of greater than or equal to 2 mm and less than or equal to 3 mm, and is welded to a winding start portion of the negative electrode.

According to the present disclosure, there can be provided a cylindrical secondary battery that can achieve higher battery capacity and higher resistance to drop shock.

### BRIEF DESCRIPTION OF DRAWING

FIG. 1 is a sectional view of a cylindrical secondary battery of the present disclosure.
FIG. 2 is a plan view of a negative electrode plate of the cylindrical secondary battery of the present disclosure.
FIG. 3 is a plan view of a positive electrode plate of the cylindrical secondary battery of the present disclosure.

### DESCRIPTION OF EMBODIMENTS

Hereinafter, embodiments of the present disclosure will be described in detail with reference to the drawings. In the following description, specific shapes, materials, directions, numeral values, and the like are exemplary illustrations for easy understanding of the present disclosure, and they can be properly modified to meet the usage, purpose, specifications, and so on. The selective combination of components of embodiments and modified examples, which are described below, are anticipated in advance.

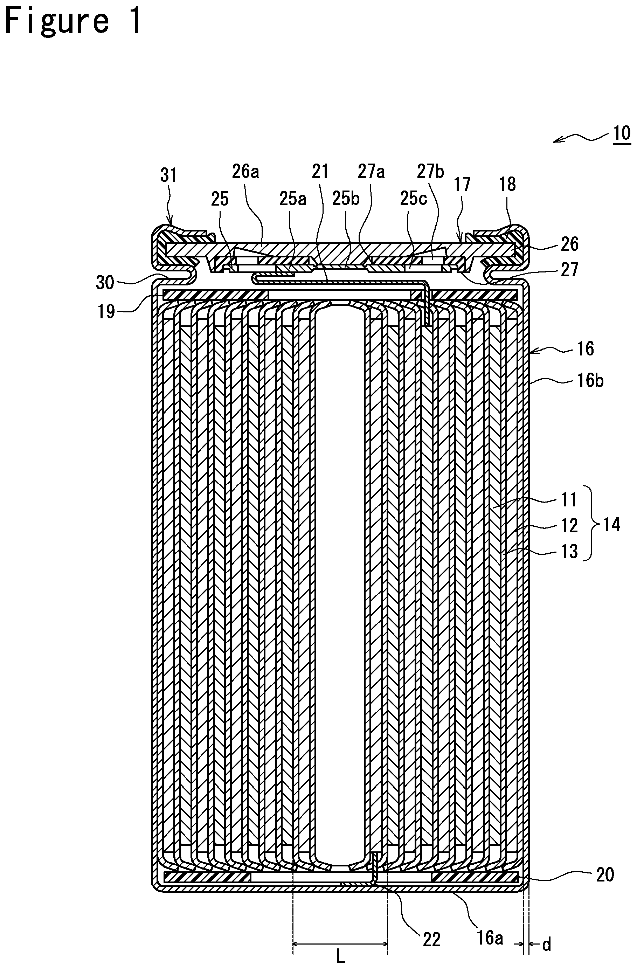

Hereinafter, an example of embodiments of a cylindrical secondary battery according to the present disclosure will be described in detail with reference to the drawings. FIG. 1 is a sectional view of a cylindrical secondary battery 10 of an example of embodiments.

As illustrated in FIG. 1, the cylindrical secondary battery 10 comprises a bottomed cylindrical exterior housing can 16 including a bottom face 16a and a side wall 16b, a sealing assembly 17 that seals an opening of the exterior housing can 16, and a gasket 18 interposed between the exterior housing can 16 and the sealing assembly 17. The cylindrical secondary battery 10 comprises an electrode assembly 14 and an electrolyte that are housed in the exterior housing can 16. The electrode assembly 14 includes a positive electrode 11, a negative electrode 12, and a separator 13, and has a structure in which the positive electrode 11 and the negative electrode 12 are spirally wound with the separator 13 interposed between the positive electrode 11 and the negative electrode 12.

In this specification, for convenience of explanation, the direction along an axial direction of the exterior housing can 16 is defined as a "longitudinal direction or an up- and-down direction", the sealing assembly 17 side (an opening side of the exterior housing can 16) of the cylindrical secondary battery 10 is defined as "upper", and the bottom face 16a side of the exterior housing can 16 is defined as "lower".

The positive electrode 11 has a positive electrode core, and a positive electrode mixture layer formed on at least one face of the core. For the positive electrode core, there can be used a foil of a metal such as aluminum or an aluminum alloy which is stable in a potential range of the positive electrode 11, a film in which such a metal is provided on a surface layer thereof, and the like. The positive electrode mixture layer includes a positive electrode active material, a conductive agent such as acetylene black, and a binder such as polyvinylidene fluoride, and is preferably formed on each face of the positive electrode core. For the positive electrode active material, there is used, for example, a lithium-transition metal composite oxide.

The negative electrode 12 has a negative electrode core, and a negative electrode mixture layer formed on at least one face of the core. For the negative electrode core, there can be used a foil of a metal such as copper or a copper alloy which is stable in a potential range of the negative electrode 12, a film in which such a metal is provided on a surface layer thereof, and the like. The negative electrode mixture layer includes a negative electrode active material and a binder such as styrene-butadiene rubber (SBR), and is preferably formed on each face of the negative electrode core. For the negative electrode active material, there is used, for example, graphite, or a silicon-containing compound.

The electrolyte may be an aqueous electrolyte, or may be a non-aqueous electrolyte. The electrolyte may be any of a liquid electrolyte and a solid electrolyte. In the present embodiment, a non-aqueous electrolyte is used for the electrolyte. The non-aqueous electrolyte includes a non-aqueous solvent, and an electrolyte salt dissolved in the non-aqueous solvent. For the non-aqueous solvent, there can be used, for example, esters, ethers, nitriles, amides, and a mixed solvent containing two kinds or more of these solvents. The non-aqueous solvent may also contain a halogen-substituted product obtained by substituting at least a part of hydrogen of these solvents with a halogen atom such as fluorine. For the electrolyte salt, there is used, for example, a lithium salt such as LiPF₆.

The cylindrical secondary battery 10 comprises insulating plates 19 and 20 arranged on the upper and lower sides of the electrode assembly 14, respectively. In the example illustrated in FIG. 1, a positive electrode tab 21 connected to the positive electrode 11 extends to the sealing assembly 17 side through a through hole in the insulating plate 19, and a negative electrode tab 22 connected to the negative electrode 12 extends to the bottom face 16a side from a radial center side of the electrode assembly 14. The positive electrode tab 21 is connected to an internal terminal plate 25 that is a bottom plate of the sealing assembly 17 by welding or the like, and a rupture plate 26 of the sealing assembly 17 electrically connected to the internal terminal plate 25 serves as a positive electrode external terminal. The negative electrode tab 22 is connected, by welding or the like, to an inner face of the bottom face 16a of the exterior housing can 16, and the exterior housing can 16 serves as a negative electrode external terminal.

The exterior housing can 16 is a metal-made container that opens at one end (upper end) in the axial direction, in which the bottom face 16a has a disk shape, and the side wall 16b is formed into a cylindrical shape along an outer circumferential edge of the bottom face 16a. The sealing assembly 17 is formed into a disk shape corresponding to a shape of the opening of the exterior housing can 16. The gasket 18 is a resin-made annular member, and is adapted to ensure the sealing property of the interior of the battery and ensure electric insulation between the exterior housing can 16 and the sealing assembly 17.

The exterior housing can 16 has a caulking portion 31 formed by bending inward an edge of the opening so that the caulking portion 31 presses the sealing assembly 17 through the gasket 18. In addition, the exterior housing can 16 has a grooved portion 30 formed by causing the side wall 16b to project inward from the outside and configured to support the sealing assembly 17 through the gasket 18. The grooved portion 30 is formed into an annular shape along a circumferential direction of the exterior housing can 16 by performing a spinning process on the side wall 16b from the outside.

The caulking portion 31 is formed by bending inward an opening edge (upper end) of the exterior housing can 16, and faces the grooved portion 30 through the sealing assembly 17 and the gasket 18 so that the sealing assembly 17 is held between the caulking portion 31 and the grooved portion 30. The caulking portion 31 is formed into an annular shape along the circumferential direction of the exterior housing can 16 in the same manner as the grooved portion 30, and presses a circumferential edge of the sealing assembly 17 from above through the gasket 18.

The sealing assembly 17 is a disk-shaped member comprising a current interruption mechanism. The sealing assembly 17 has a stacked structure of the internal terminal plate 25, an insulating plate 27, and the rupture plate 26 in this order from the electrode assembly 14 side. The internal terminal plate 25 is a metal plate including an annular portion 25a to which the positive electrode tab 21 is to be connected, and a thin center 25b that is disconnected from the annular portion 25a when an internal pressure of the battery exceeds a predetermined threshold. A vent hole 25c is formed in the annular portion 25a.

The rupture plate 26 is disposed to face the internal terminal plate 25 with the insulating plate 27 interposed between the rupture plate 26 and the internal terminal plate 25. In the insulating plate 27, an opening 27a is formed at a center in a radial direction, and a vent hole 27b is formed in a portion overlapping with the vent hole 25c in the internal terminal plate 25. The rupture plate 26 has a vent 26a that ruptures when the internal pressure of the battery exceeds a predetermined threshold, and the vent 26a is connected, by welding or the like, to the center 25b of the internal terminal plate 25 through the opening 27a of the insulating plate 27. The insulating plate 27 insulates a portion other than a connection portion between the annular portion 25a and the center 25b of the vent 26a.

The vent 26a includes a downward projection projecting inward of the battery, and a thin portion formed around the downward projection, and is formed at the center in the radial direction of the rupture plate 26. In the cylindrical secondary battery 10, the internal terminal plate 25 to which the positive electrode tab 21 is connected is electrically connected to the rupture plate 26, whereby there is formed a current pathway connecting from the electrode assembly 14 to the rupture plate 26. If an abnormality occurs in the battery, causing an increase in the internal pressure of the battery, the internal terminal plate 25 breaks, and the center 25b is disconnected from the annular portion 25a, whereby the vent 26a is deformed to project outward of the battery. Thus, the current pathway is cut off. If the internal pressure of the battery further increases, the vent 26a ruptures, resulting in formation of a gas venting port.

Note that the structure of the sealing assembly is not limited to the structure illustrated in FIG. 1. The sealing assembly may have a stacked structure including two vent members, or may have a projected sealing assembly cap covering the vent member.

As already described earlier, when the thickness of the exterior housing can is reduced to increase the battery capacity, the exterior housing can is crushed when suffering the drop shock, causing the deformation of the electrode assembly, whereby a short circuit occurs from the negative electrode tab as a starting point, thus causing heat generation. As a result of various investigations, the present inventors have found that a cylindrical secondary battery satisfying the following conditions makes it possible to achieve both higher battery capacity and higher resistance to drop shock while the thickness of the exterior housing can is reduced.

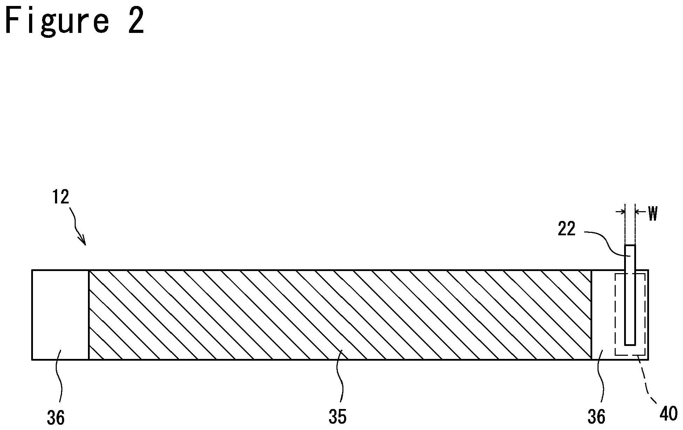

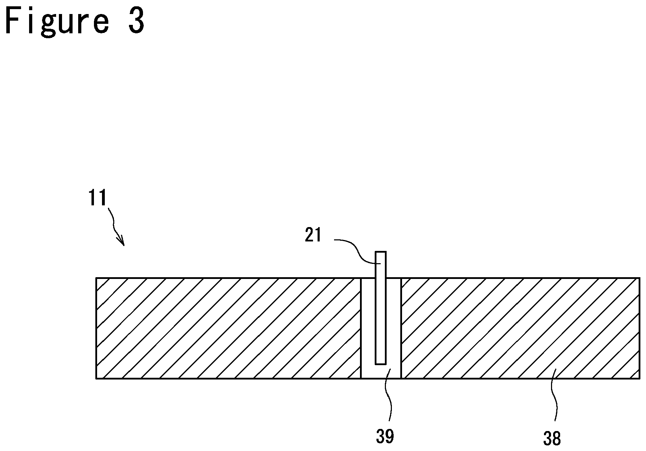

The cylindrical secondary battery 10 of the present disclosure will be described in detail with reference to FIGS. 1 to 3. As illustrated in FIG. 1, an innermost circumferential positive electrode inner diameter in the electrode assembly 14 of the cylindrical secondary battery 10 is defined as L, and a thickness of the exterior housing can 16 is defined as d. FIG. 2 illustrates a plan view of the negative electrode (negative electrode plate) 12 of the cylindrical secondary battery 10, and FIG. 3 illustrates a plan view of the positive electrode (positive electrode plate) 11 of the cylindrical secondary battery.

The cylindrical secondary battery 10 according to the present disclosure comprises the electrode assembly 14 in which the belt-shaped positive electrode 11 and the belt-shaped negative electrode 12 are wound with the belt-shaped separator 13 interposed between the belt-shaped positive electrode 11 and the belt-shaped negative electrode 12, the bottomed cylindrical exterior housing can 16 that houses the electrode assembly 14, and the sealing assembly 17 that seals an opening of the exterior housing can 16. In the exterior housing can 16, the side wall thickness of the can containing iron as a principal component is greater than or equal to 0.12 mm and less than or equal to 0.25 mm, in the electrode assembly 14, the innermost circumferential positive electrode inner diameter L is greater than or equal to 2.2 mm and less than or equal to 3.5 mm, and the negative electrode 12 has the negative electrode tab 22 electrically connected to the exterior housing can 16, the negative electrode tab 22 includes a Cu layer, has a thickness of greater than or equal to 0.05 mm and less than or equal to 0.09 mm, and a width W of greater than or equal to 2 mm and less than or equal to 3 mm, and is welded to a winding start portion of the negative electrode 12.

Satisfying the above-described requirements makes it possible to achieve a reduction in the thickness and an increase in the battery capacity. When a shock is suffered due to a drop or the like, the negative electrode tab 22 follows the deformation of the electrode assembly 14, thereby suppressing a short circuit, and thus, the heat generation can be suppressed.

The thickness d of the exterior housing can is more preferably greater than or equal to 0.12 mm and less than or equal to 0.22 mm. The innermost circumferential positive electrode inner diameter L is more preferably greater than or equal to 2.2 mm and less than or equal to 3.1 mm. Satisfying these conditions enables the battery to achieve higher battery capacity and suppress of a short circuit and heat generation when suffering a drop shock. An insulating tape 40 is more preferably attached on at least one of the negative electrode tab 22 and a negative electrode current collecting foil (negative electrode current collector exposed portion 36) located on a rear surface of a welding surface (see FIG. 2). This is because the insulating tape 40 helps to prevent the negative electrode tab 22 from interfering with the positive electrode mixture layer and the negative electrode mixture layer when the negative electrode tab 22 is deformed, and thus suppressing heat generation due to a short circuit.

Hereainfter, conditions required for the cylindrical secondary battery 10 will be described.

### <Thickness of Exterior Housing Can>

Reducing the thickness d of the exterior housing can 16 makes it possible to increase the capacity inside the exterior housing can 16. Increasing the capacity inside the exterior housing can 16 makes it possible to increase the volume of the electrode assembly 14 to be housed inside the exterior housing can 16 and increase the battery capacity. Note that in the case where the thickness of the exterior housing can 16 is smaller than 0.12 mm, the exterior housing can 16 is largely deformed when suffering a shock, and the negative electrode tab 22 interferes with the positive electrode mixture layer and the negative electrode mixture layer of the electrode assembly 14 to thereby cause a short circuit, thus making it impossible to suppress heat generation. Alternatively, when the thickness d of the exterior housing can 16 is greater than 0.25 mm, the capacity inside the exterior housing can 16 is reduced, undesirably resulting in the reduction in the battery capacity. When the thickness d of the exterior housing can 16 is greater than or equal to 0.12 mm and less than or equal to 0.25 mm, satisfying the other conditions described later makes it possible to achieve both higher battery capacity and higher resistance to drop shock.

### <Innermost Circumferential Positive Electrode Inner Diameter in Electrode Assembly>

Reducing the innermost circumferential positive electrode inner diameter L in the electrode assembly 14 makes it possible to increase the number of turns of the electrode assembly 14, and thus increasing the volume of the electrode assembly 14. Accordingly, the battery capacity can be increased. In the case where the innermost circumferential positive electrode inner diameter L is smaller than 2.2 mm, when a shock is suffered, the negative electrode tab 22 interferes with the positive electrode mixture layer and the negative electrode mixture layer to thereby cause a short circuit, thus making it impossible to suppress heat generation. When the innermost circumferential positive electrode inner diameter L in the electrode assembly 14 is greater than 3.5 mm, the battery capacity is undesirably reduced. When the innermost circumferential positive electrode inner diameter L is greater than or equal to 2.2 mm and less than or equal to 3.5 mm, it is possible to achieve both higher battery capacity and higher resistance to drop shock by satisfying the other conditions at the same time.

To manage the innermost circumferential positive electrode inner diameter L when manufacturing the cylindrical secondary battery 10, a diameter inside the innermost circumferential positive electrode can be measured from a CT image of a cross section of the battery, for example, so that it can be confirmed whether predetermined conditions are satisfied.

As described above, reducing the thickness d of the exterior housing can 16 and reducing the innermost circumferential positive electrode inner diameter L in the electrode assembly 14 make it possible to increase the battery capacity. As already described earlier, the increase in the battery capacity and the resistance to drop shock are in a trade-off relationship, and satisfying requirements of the negative electrode tab 22 described below makes it possible to achieve both higher battery capacity and higher resistance to drop shock.

### <Material of Negative Electrode Tab>

The electrode assembly 14 is deformed when the exterior housing can 16 is crushed upon shock. When the negative electrode tab 22 has no flexibility, the negative electrode tab 22 interferes with the positive electrode mixture layer and the negative electrode mixture layer without following the deformation of the electrode assembly 14, thus causing a short circuit and heat generation. When the negative electrode tab 22 includes a Cu layer, the flexibility of the negative electrode tab 22 is increased, and the negative electrode tab 22 is deformed while following the deformation of the electrode assembly 14, and does not interfere with the positive electrode mixture layer and the negative electrode mixture layer, thus making it possible to suppress a short circuit and heat generation. If the negative electrode tab 22 is subjected to heat treatment, this preferably makes the negative electrode tab 22 easier to follow the deformation upon shock.

### <Thickness of Negative Electrode Tab>

The thickness of the negative electrode tab 22 affects the followability to the deformation when the exterior housing can 16 is crushed upon shock. The negative electrode tab 22 easily follows the deformation as the thickness of the negative electrode tab 22 is smaller, but in the case where the thickness is smaller than 0.05 mm, the internal resistance of the negative electrode tab 22 is undesirably increased. On the other hand, in the case where the thickness is greater than 0.09 mm, the followability to the deformation becomes impaired, and thus, when the exterior housing can 16 is crushed and deformed, the negative electrode tab 22 interferes with the positive electrode mixture layer and the negative electrode mixture layer, causing a short circuit and heat generation. Accordingly, when the thickness of the negative electrode tab 22 is greater than or equal to 0.05 mm and less than or equal to 0.09 mm, it is possible to achieve both higher battery capacity and higher resistance to drop shock by satisfying the other conditions at the same time.

### <Width of Negative Electrode Tab>

In the case where the width of the negative electrode tab 22 is large, the negative electrode tab 22 easily interferes with the positive electrode mixture layer and the negative electrode mixture layer when the exterior housing can 16 is crushed upon shock, thus making it impossible to suppress a short circuit and heat generation. On the other hand, in the case where the width of the negative electrode tab 22 is small, the internal resistance of the negative electrode tab 22 is undesirably increased. Accordingly, when the width of the negative electrode tab 22 is greater than or equal to 2 mm and less than or equal to 3 mm, it is possible to achieve both higher battery capacity and higher resistance to drop shock by satisfying the other conditions at the same time.

### <Welding Position of Negative Electrode Tab>

In the case where the negative electrode tab 22 is welded to a winding finish portion, it is necessary to shorten both electrode plates of the positive electrode and the negative electrode to insert the negative electrode tab 22 into the exterior housing can 16, and thus the battery capacity is undesirably reduced. Setting the welding position of the negative electrode tab 22 to the negative electrode 12 at a winding start portion makes it possible to ensure the lengths of both electrode plates of the positive electrode and the negative electrode, and thus the battery capacity can be increased.

Furthermore, attaching the insulating tape 40 (indicated by broken lines in FIG. 2) on at least one of the negative electrode tab 22 and the negative electrode current collector exposed portion 36 located on a rear surface of a welding surface preferably makes it possible to suppress the heat generation during a short circuit due to a shock.

According to the cylindrical secondary battery 10 satisfying the above-described conditions, reducing the thickness of the exterior housing can 16 enables the battery capacity to be increased, and the negative electrode tab 22 follows the deformation of the electrode assembly 14 when a shock is suffered, whereby the negative electrode tab 22 can be prevented from interfering with the positive electrode mixture layer and the negative electrode mixture layer, thus making it possible to suppress a short circuit and heat generation. Accordingly, the cylindrical secondary battery can be provided which achieves both of higher battery capacity and higher resistance to drop shock.

Next, the cylindrical secondary battery 10 of the present disclosure will be further described in detail with reference to Examples.

### <Example 1>

A cylindrical secondary battery of Example 1 was produced in the following procedure.

### (Production of Positive Electrode Plate)

There were mixed 100 parts by weight of a lithium-nickel-cobalt-aluminum composite oxide represented by LiNi_{0.91}Co_{0.04}Al_{0.05}O₂ and 0.7 parts by weight of acetylene black (AB) as the positive electrode active materials, and 0.5 parts by weight of polyvinylidene fluoride (PVdF) and 10 parts by weight of a binder solution as the binders, and N-methyl-2-pyrrolidone (NMP) was further added to the mixture so that the solid content becomes 79%, and was kneaded at 25°C to prepare a positive electrode mixture slurry. Then, the positive electrode mixture slurry was applied on each face other than a substantial center of a positive electrode current collector made from an aluminum foil, and dried. The resultant product was cut into a predetermined electrode size and rolled to 150 µm by roll pressing to produce a positive electrode plate 11 in which a positive electrode mixture layer 38 was formed on each face of the positive electrode current collector. At this time, the amount to be applied was adjusted so that the density of the positive electrode mixture layer 38 became 3.6 g/cc. Then, in the above-described positive electrode plate 11, an aluminum lead (positive electrode tab 21) was welded to a positive electrode current collector exposed portion 39. FIG. 3 illustrates a plan view of the produced positive electrode plate 11.

### (Production of Negative Electrode Plate)

There were mixed 94 parts by weight of graphite powder and 6 pars by weight of SiO as the negative electrode active materials, and 0.7 parts by weight of carboxymethyl cellulose (CMC) and 0.6 parts by weight of styrene-butadiene rubber (SBR), and an appropriate amount of water was added to the mixture to prepare a negative electrode mixture slurry. Then, the negative electrode mixture slurry was applied on each face other than both ends of the negative electrode current collector made from a copper foil, and dried. The resultant product was cut into a predetermined electrode size and rolled by roll pressing to produce a negative electrode plate 12 in which a negative electrode mixture layer 35 was formed on each face of the negative electrode current collector. At this time, the pressing pressure was adjusted so that the density of the negative electrode mixture layer 35 became 1.6 g/cc. Next, in the above-described negative electrode plate, a lead (negative electrode tab 22) made of an S material having a thickness of 0.09 mm, a width of 3 mm, and a three-layer clad configuration of Ni, Cu, and Ni was welded to the negative electrode current collector exposed portion 36 in the winding start portion. FIG. 2 illustrates a plan view of the produced negative electrode plate 12.

### (Preparation of Non-Aqueous Electrolyte)

Ethylene carbonate (EC), methyl ethyl carbonate (EMC), and dimethyl carbonate (DMC) were mixed together in a volume ratio of 3:3:4. The non-aqueous electrolyte in which LiPF₆ was dissolved in the mixed solvent so that the concentration of LiPF₆ became 1.2 mol/L to produce a non-aqueous electrolyte.

### (Production of Battery)

The positive electrode plate 11 and the negative electrode plate 12 were spirally wound through the separator 13 using a winding core having a diameter of 3.5 mm, the separator 13 having a thickness of 14 µm and made of polyethylene, to produce a wound-type electrode assembly. The electrode assembly 14 was housed in a bottomed cylindrical-shaped battery case body having an outer diameter of 21.0 mm and a height of 70 mm, and having a side wall thickness of 0.25 mm of an exterior housing can. At this time, the lengths of the positive electrode plate 11 and the negative electrode plate 12 were adjusted so that a clearance between the electrode assembly 14 and an inner diameter of the battery case became 0.5 mm. After the non-aqueous electrolyte was injected, an opening of the battery case body was sealed with the gasket and the sealing assembly to produce a cylindrical secondary battery.

Hereinafter, cylindrical secondary batteries of Examples 2 to 8 will be described focusing on the points that differ from the cylindrical secondary battery of Example 1.

### <Example 2>

- A lead (negative electrode tab) made of an S material having a thickness of 0.09 mm, a width of 3 mm, and a three-layer clad configuration of Ni, Cu, and Ni was welded.
- A winding core having a diameter of 2.2 mm was used for winding.
- The electrode assembly was housed in the bottomed cylindrical-shaped battery case body having a side wall thickness of 0.20 mm of an exterior housing can.

### <Example 3>

- A lead (negative electrode tab) made of an S material having a thickness of 0.09 mm, a width of 3 mm, and a two-layer clad configuration of Ni and Cu was welded.
- A winding core having a diameter of 3.3 mm was used for winding.
- The electrode assembly was housed in the bottomed cylindrical-shaped battery case body having a side wall thickness of 0.20 mm of an exterior housing can.

### <Example 4>

- A lead (negative electrode tab) made of an S material having a thickness of 0.08 mm, a width of 3 mm, and a three-layer clad configuration of Ni, Cu, and Ni was welded.
- A winding core having a diameter of 3.3 mm was used for winding.
- The electrode assembly was housed in the bottomed cylindrical-shaped battery case body having a side wall thickness of 0.12 mm of an exterior housing can.

### <Example 5>

- A lead (negative electrode tab) made of an annealed material having a thickness of 0.05 mm, a width of 3 mm, and a three-layer clad configuration of Ni, Cu, and Ni was welded.
- A winding core having a diameter of 3.3 mm was used for winding.
- The electrode assembly was housed in the bottomed cylindrical-shaped battery case body having a side wall thickness of 0.20 mm of an exterior housing can.

### <Example 6>

- A lead (negative electrode tab) made of an annealed material having a thickness of 0.08 mm, a width of 3 mm, and a three-layer clad configuration of Ni, Cu, and Ni was welded.
- A winding core having a diameter of 3.1 mm was used for winding.
- The electrode assembly was housed in the bottomed cylindrical-shaped battery case body having a side wall thickness of 0.20 mm of an exterior housing can.

### <Example 7>

- A lead (negative electrode tab) made of an annealed material having a thickness of 0.08 mm, a width of 2 mm, and a three-layer clad configuration of Ni, Cu, and Ni was welded.
- A winding core having a diameter of 3.3 mm was used for winding.
- The electrode assembly was housed in the bottomed cylindrical-shaped battery case body having a side wall thickness of 0.20 mm of an exterior housing can.

### <Example 8>

- A lead (negative electrode tab) made of an annealed material having a thickness of 0.08 mm, a width of 3 mm, and a two-layer clad configuration of Ni and Cu was welded, and an adhesive tape made of polypropylene (PP) base material having a thickness of 20 µm was attached thereto.
- A winding core having a diameter of 3.1 mm was used for winding.
- The electrode assembly was housed in the bottomed cylindrical-shaped battery case body having a side wall thickness of 0.20 mm of an exterior housing can.

### <Comparative Example 1>

- A lead (negative electrode tab) made of an S material having a thickness of 0.08 mm, a width of 3 mm, and a single-layer clad configuration of Ni was welded.
- A winding core having a diameter of 3.5 mm was used for winding.
- The electrode assembly was housed in the bottomed cylindrical-shaped battery case body having a side wall thickness of 0.22 mm of an exterior housing can.

### <Comparative Example 2>

- A lead (negative electrode tab) made of an S material having a thickness of 0.08 mm, a width of 3 mm, and a three-layer clad configuration of Ni, Cu, and Ni was welded.
- A winding core having a diameter of 3.5 mm was used for winding.
- The electrode assembly was housed in the bottomed cylindrical-shaped battery case body having a side wall thickness of 0.11 mm of an exterior housing can.

### <Comparative Example 3>

- A lead (negative electrode tab) made of an S material having a thickness of 0.08 mm, a width of 3 mm, and a three-layer clad configuration of Ni, Cu, and Ni was welded.
- A winding core having a diameter of 2.1 mm was used for winding. The electrode assembly was housed in the bottomed cylindrical-shaped battery case body having a side wall thickness of 0.22 mm of an exterior housing can.

### <Comparative Example 4>

- A lead (negative electrode tab) made of an S material having a thickness of 0.10 mm, a width of 3 mm, and a three-layer clad configuration of Ni, Cu, and Ni was welded.
- A winding core having a diameter of 3.5 mm was used for winding.
- The electrode assembly was housed in the bottomed cylindrical-shaped battery case body having a side wall thickness of 0.22 mm of an exterior housing can.

### <Comparative Example 5>

- A lead (negative electrode tab) made of an S material having a thickness of 0.09 mm, a width of 3 mm, and a three-layer clad configuration of Ni, Cu, and Ni was welded.
- A winding core having a diameter of 3.5 mm was used for winding.
- The electrode assembly was housed in the bottomed cylindrical-shaped battery case body having a side wall thickness of 0.22 mm of an exterior housing can.

### <Comparative Example 6>

- A lead (negative electrode tab) made of an S material having a thickness of 0.09 mm, a width of 3 mm, and a three-layer clad configuration of Ni, Cu, and Ni was welded to the winding finish portion.
- A winding core having a diameter of 3.5 mm was used for winding.
- The electrode assembly was housed in the bottomed cylindrical-shaped battery case body having a side wall thickness of 0.22 mm of an exterior housing can.

### <Evaluation of Cylindrical Secondary Battery>

### (Measurement of Battery Capacity)

Each of the cylindrical secondary batteries produced in Examples 1 to 8 and Comparative Examples 1 to 6 was constantly charged at a current value of 2500 mA to a charge termination voltage of 4.2 V, and charged at constant voltage of 4.2 V for 60 minutes. Then, a current was discharged at 1000 mA to a discharge termination voltage of 2.5 V, and the discharge capacity (mAh in unit) was measured.

### (Shock Test)

Each of the produced cylindrical secondary batteries was subjected to a shock test according to UL1642, the battery temperature was measured, and the maximum temperature was recorded.

Regarding each of Examples 1 to 8 and Comparative Examples 1 to 6, the battery capacity, and the measurement result of the maximum temperature in the shock test are shown in Table 1.

**[Table 1]**

| | Can thickness | Innermost circumferential positive electrode inner diameter | Negative electrode tab thickness | Negative electrode tab width | Negative electrode tab raw material | Battery capacity [mAh] | Temperature at shock |
|---|---|---|---|---|---|---|---|
| Example1 | 0.25mm | 3.5mm | 0.09mm | 3mm | Ni/Cu/Ni S material | 5000 | 45°C |
| Example2 | 0.20mm | 2.2mm | 0.09mm | 3mm | Ni/Cu/Ni S material | 5130 | 51°C |
| Example3 | 0.20mm | 3.3mm | 0.09mm | 3mm | Ni/Cu S material | 5030 | 52°C |
| Example4 | 0.12mm | 3.3mm | 0.08mm | 3mm | Ni/Cu/Ni S material | 5080 | 49°C |
| Example5 | 0.20mm | 3.3mm | 0.05mm | 3mm | Ni/Cu/Ni Annealed material | 5030 | 25°C |
| Example6 | 0.20mm | 3.1mm | 0.08mm | 3mm | Ni/Cu/Ni Annealed material | 5030 | 25°C |
| Example7 | 0.20mm | 3.3mm | 0.08mm | 2mm | Ni/Cu/Ni Annealed material | 5030 | 25°C |
| Example8 | 0.20mm | 3.1mm | 0.08mm | 3mm | Ni/Cu Annealed material | 5030 | 25°C |
| Comparative Example1 | 0.22mm | 3.5mm | 0.08mm | 3mm | Ni S material | 5030 | 79°C |
| Comparative Example2 | 0.11mm | 3.5mm | 0.08mm | 3mm | Ni/Cu/Ni S material | 5090 | 82°C |
| Comparative Example3 | 0.22mm | 2.1mm | 0.08mm | 3mm | Ni/Cu/Ni S material | 5110 | 83°C |
| Comparative Example4 | 0.22mm | 3.5mm | 0.1mm | 3mm | Ni/Cu/Ni S material | 5000 | 74°C |
| Comparative Example5 | 0.22mm | 3.5mm | 0.09mm | 3.5mm | Ni/Cu/Ni S material | 5000 | 85°C |
| Comparative Example6 (Winding finish tab) | 0.22mm | 3.5mm | 0.09mm | 3mm | Ni/Cu/Ni S material | 4900 | 40°C |

### <Evaluation Reference Value>

An evaluation reference value of the battery capacity was greater than or equal to 5000 mAh. An evaluation reference value of the temperature in the shock test was less than 60°C. When the temperature measurement value in the shock test was below the evaluation reference value, it was evaluated that high resistance to shock was obtained because a short circuit and heat generation did not occur or heat generation slightly occurred.

Throughout the examples, it was found that the battery capacity in each of Examples 1 to 8 was greater than or equal to 5000 mAh, and the temperature measurement value in the shock test was below 60°C which was the reference value. Accordingly, it is found that the cylindrical secondary battery of each of Examples 1 to 8 achieves both of higher battery capacity and higher resistance to shock.

Next, each example will be considered. In Example 1, all the parameters of the side wall thickness of the exterior housing can, the innermost circumferential positive electrode diameter, the negative electrode tab thickness, the negative electrode tab width showed the maximum values among Examples 1 to 8. The evaluation result of Example 1 showed that the battery capacity was 5000 mAh, the temperature measurement value in the shock test was 45°C, and thus both values satisfied the evaluation reference values.

In Example 2, the innermost circumferential positive electrode diameter was 2.2 mm and showed the minimum value. At this time, the battery capacity was 5130 mAh and showed the maximum value among Examples 1 to 8. Thereby, it is found that reducing the innermost circumferential positive electrode diameter greatly contributes to higher battery capacity.

In each of Examples 2, 3, and 5, the thickness of the exterior housing can was 0.2 mm and the battery capacity was greater than or equal to 5000 mAh. In each of Comparative Examples 1, and 3 to 5, the thickness of the exterior housing can was 0.22 mm and the battery capacity was greater than or equal to 5000 mAh. From these results, the thickness is more preferably less than or equal to 0.22 mm from the viewpoint of higher battery capacity.

In each of Examples 5 to 8, the annealed material was included as the raw material of the negative electrode tab. The temperature measurement value in the shock test in each of Examples 5 to 8 was 25°C which is a more excellent result than those in Examples 1 to 4. Therefore, the annealed material is preferably included as the raw material of the negative electrode tab from the viewpoint of the resistance to shock.

In view of the results in Comparative Examples 1 to 5 in Table 1, all of the temperature measurement values in the shock test did not satisfy the temperature reference less than or equal to 60°C. Hereinafter, each condition of each Comparative Example will be considered.

The temperature measurement value in the shock test of Comparative Example 1 was 79°C and did not satisfy the temperature evaluation criteria. In Comparative Example 1, since the negative electrode tab included no Cu layer and had no flexibility, it is considered that the negative electrode tab interfered with the positive electrode mixture layer and the negative electrode mixture layer without being able to follow the deformation of the exterior housing can when a shock was suffered, thus causing a short circuit and heat generation.

The temperature measurement value in the shock test of Comparative Example 2 was 82°C and did not satisfy the temperature evaluation criteria. In Comparative Example 2, since the side wall thickness of the exterior housing can was 0.11 mm and the side wall thickness of the exterior housing can was thin, it is considered that a large deformation occurred in the exterior housing can when a shock was suffered and the negative electrode tab interfered with the positive electrode mixture layer and the negative electrode mixture layer without being able to follow the deformation, thus causing a short circuit and heat generation.

The temperature measurement value in the shock test of Comparative Example 3 was 83°C and did not satisfy the temperature evaluation criteria. In Comparative Example 3, the innermost circumferential positive electrode inner diameter was 2.2 mm and showed the small value. Since the innermost circumferential positive electrode inner diameter was small, it is considered that the negative electrode tab interfered with the positive electrode mixture layer and the negative electrode mixture layer when the shock was suffered, thus making it impossible to suppress a short circuit and heat generation.

The temperature measurement value in the shock test of Comparative Example 4 was 74°C and did not satisfy the temperature evaluation criteria. In Comparative Example 4, the thickness of the negative electrode tab was 0.1 mm and showed a large value. Since the thickness of the negative electrode tab was large, it is considered that the followability to the deformation of the exterior housing can became impaired when a shock was suffered, and the negative electrode tab interfered with the positive electrode mixture layer and the negative electrode mixture layer, thus causing a short circuit and heat generation.

The temperature measurement value in the shock test of Comparative Example 5 was 85°C and did not satisfy the temperature evaluation criteria. In Comparative Example 5, the width of the negative electrode tab was 3.5 mm and showed a large value. Since the width of the negative electrode tab was large, it is considered that the negative electrode tab interfered with the positive electrode mixture layer and the negative electrode mixture layer when the exterior housing can is crushed upon shock, thus making it impossible to suppress a short circuit and heat generation.

The battery capacity value of Comparative Example 6 was 4900 mAh and was below the evaluation reference value of the battery capacity. In Comparative Example 6, the welding position of the negative electrode tab was at the end of the winding. The other conditions satisfy the conditions of the cylindrical secondary battery of the present disclosure. Accordingly, when the welding position of the negative electrode tab is at the end of the winding, it is found that the battery capacity cannot be increased.

As described above, in each of Examples 1 to 8, the thickness of the exterior housing can, the inner diameter of the innermost circumferential positive electrode, and the material in the electrode assembly, the thickness, the width, and the winding welding position of the negative electrode tab satisfy the predetermined conditions, the battery capacity shows the reference value greater than or equal to 5000 mAh, and the temperature measurement value in the shock test is below 60°C. Accordingly, it can be understood that the cylindrical secondary battery can be provided which achieves both of higher battery capacity and higher resistance to shock.

The present invention is not limited to the above embodiments and modified examples, and various changes and improvements are possible within the matters described in the claims of the present application.

### REFERENCE SIGNS LIST

10 cylindrical secondary battery, 11 positive electrode (positive electrode plate), 12 negative electrode (negative electrode plate), 13 separator, 14 electrode assembly, 16 exterior housing can, 16a bottom face, 16b side wall, 17 sealing assembly, 18 gasket, 19 insulating plate, 20 insulating plate, 21 positive electrode tab, 22 negative electrode tab, 25 internal terminal plate, 25a annular portion, 25b center, 25c vent hole, 26 rupture plate, 26a vent, 27 insulating plate, 27a opening, 27b vent hole, 30 grooved portion, 35 negative electrode mixture layer, 36 negative electrode current collector exposed portion, 38 positive electrode mixture layer, 39 positive electrode current collector exposed portion, 40 insulating tape

## Claims

1. A cylindrical secondary battery (10), comprising:
an electrode assembly (14) in which a belt-shaped positive electrode (11) and a belt-shaped negative electrode (12) are wound with a belt-shaped separator (13) interposed between the belt-shaped positive electrode (11) and the belt-shaped negative electrode (12);
a bottomed cylindrical exterior housing can (16) that houses the electrode assembly (14); and
a sealing assembly (17) that seals an opening of the exterior housing can (16),
wherein in the exterior housing can (16),
a side (16b) wall thickness of the exterior housing can containing iron as a principal component is greater than or equal to 0.12 mm and less than or equal to 0.25 mm,
in the electrode assembly (14),
an innermost circumferential positive electrode (11) inner diameter is greater than or equal to 2.2 mm and less than or equal to 3.5 mm,
the negative electrode (12) has a negative electrode tab (22) electrically connected to the exterior housing can (16), and
the negative electrode tab (22) includes a Cu layer, has a thickness of greater than or equal to 0.05 mm and less than or equal to 0.09 mm, and a width of greater than or equal to 2 mm and less than or equal to 3 mm, and is welded to a winding start portion of the negative electrode (12).

2. The cylindrical secondary battery (10) according to claim 1, wherein the side wall (16b) thickness of the exterior housing can (16) is greater than or equal to 0.12 mm and less than or equal to 0.22 mm.

3. The cylindrical secondary battery (10) according to claim 1 or 2, wherein
the innermost circumferential positive electrode (11) inner diameter is greater than or equal to 2.2 mm and less than or equal to 3.1 mm.

4. The cylindrical secondary battery (10) according to any one of claims 1 to 3, wherein
an insulating tape (40) is attached on at least one of the negative electrode tab (22) and a negative electrode current collecting foil located on a rear surface of a welding surface.

## Patentansprüche

1. Zylindrische Sekundärbatterie (10), mit:
einer Elektrodenanordnung (14), in der eine bandförmige positive Elektrode (11) und eine bandförmige negative Elektrode (12) gewickelt sind, wobei ein bandförmiger Separator (13) zwischen der bandförmigen positiven Elektrode (11) und der bandförmigen negativen Elektrode (12) angeordnet ist;
einem becherförmiges zylindrisches Außengehäuse (16), das die Elektrodenanordnung (14) aufnimmt; und
einer Dichtungsanordnung (17), die eine Öffnung des Außengehäuses (16) abdichtet,
wobei in dem Außengehäuse (16)
eine Dicke der Seitenwand (16a) des Außengehäuses, das Eisen als Hauptbestandteil enthält, größer oder gleich 0,12 mm und kleiner oder gleich 0,25 mm ist,
in der Elektrodenanordnung (14)
ein Innendurchmesser der in Umfangsrichtung innersten positiven Elektrode (11) größer oder gleich 2,2 mm und kleiner oder gleich 3,5 mm ist,
die negative Elektrode (12) eine negative Elektrodenlasche (22) aufweist, die elektrisch mit dem Außengehäuse (16) verbunden ist, und
die negative Elektrodenlasche (22) eine Cu-Schicht umfasst, eine Dicke von größer oder gleich 0,05 mm und kleiner oder gleich 0,09 mm und eine Breite von größer oder gleich 2 mm und kleiner oder gleich 3 mm aufweist und an einem Wickelanfangsabschnitt der negativen Elektrode (12) angeschweißt ist.

2. Zylindrische Sekundärbatterie (10) nach Anspruch 1, wobei die Dicke der Seitenwand (16a) des Außengehäuses (16) größer oder gleich 0,12 mm und kleiner oder gleich 0,22 mm ist.

3. Zylindrische Sekundärbatterie (10) nach Anspruch 1 oder 2, wobei der Innendurchmesser der in Umfangsrichtung innersten positiven Elektrode (11) größer oder gleich 2,2 mm und kleiner oder gleich 3,1 mm ist.

4. Zylindrische Sekundärbatterie (10) nach einem der Ansprüche 1 bis 3, wobei ein Isolierband (40) an mindestens einem von der negativen Elektrodenlasche (22) und einer negativen Elektrodenstromsammelfolie, die auf einer Rückseite einer Schweißfläche angeordnet ist, angebracht ist.

## Revendications

1. Batterie secondaire cylindrique (10), comprenant :
un ensemble d'électrodes (14) dans lequel une électrode positive en forme de bande (11) et une électrode négative en forme de bande (12) sont enroulées avec un séparateur en forme de bande (13) interposé entre l'électrode positive en forme de bande (11) et l'électrode négative en forme de bande (12) ;
un boîtier de logement extérieur cylindrique à fond (16) qui loge l'ensemble d'électrodes (14) ; et
un ensemble d'étanchéité (17) qui ferme une ouverture du boîtier de logement extérieur (16),
dans lequel, dans le boîtier de logement extérieur (16),
une épaisseur de paroi latérale (16a) du boîtier de logement extérieur contenant du fer en tant que composant principal est supérieure ou égale à 0,12 mm et inférieure ou égale à 0,25 mm,
dans l'ensemble d'électrodes (14),
un diamètre intérieur circonférentiel le plus interne de l'électrode positive (11) est supérieur ou égal à 2,2 mm et inférieur ou égal à 3,5 mm,
l'électrode négative (12) comporte une languette d'électrode négative (22) électriquement connectée au boîtier de logement extérieur (16), et
la languette d'électrode négative (22) comprend une couche de Cu, a une épaisseur supérieure ou égale à 0,05 mm et inférieure ou égale à 0,09 mm, et une largeur supérieure ou égale à 2 mm et inférieure ou égale à 3 mm, et est soudée à une partie de début d'enroulement de l'électrode négative (12).

2. Batterie secondaire cylindrique (10) selon la revendication 1, dans laquelle l'épaisseur de paroi latérale (16a) du boîtier de logement extérieur (16) est supérieure ou égale à 0,12 mm et inférieure ou égale à 0,22 mm.

3. Batterie secondaire cylindrique (10) selon la revendication 1 ou 2, dans laquelle le diamètre intérieur circonférentiel le plus interne de l'électrode positive (11) est supérieur ou égal à 2,2 mm et inférieur ou égal à 3,1 mm.

4. Batterie secondaire cylindrique (10) selon l'une quelconque des revendications 1 à 3, dans laquelle un ruban isolant (40) est fixé sur au moins l'une de la languette d'électrode négative (22) et d'une feuille collectrice de courant d'électrode négative située sur une surface arrière d'une surface de soudage.
